# EUROPEAN PATENT SPECIFICATION

(11) **EP 2 186 456 B1**
(45) Date of publication and mention of the grant of the patent: **10.04.2013**
(21) Application number: 08168459.9
(22) Date of filing: 06.11.2008
(51) Int. Cl.: A47J 31/44

(54) **Device for preparing shaken beverages**
Vorrichtung zur Zubereitung von geschüttelten Getränken
Dispositif pour la préparation de boissons sécoueés

(43) Date of publication of application: 19.05.2010
(73) Proprietor: Mac Design S.r.l., 55049 Viareggio (IT)
(72) Inventor: Peluso, Rosario, 55049, Viareggio (Lucca) (IT)
(74) Representative: Soldatini, Andrea

(56) References cited:
- US-A- 3 794 952
- US-A- 5 724 883
- US-B1- 7 231 142

## Description

The present invention generally relates to the field of the beverage machines, and more precisely it refers to a device for preparing shaken beverages such as, in particular, coffee-based beverages.

As is known, the preparation of shaken coffee involves first preparing the coffee beverage, then pouring it into a shaker, adding ice cubes and agitating the mixture as necessary. When a particularly cold shaken coffee needs to be prepared, it is common practice to add crushed ice to the shaker instead of cubes. In this case a preliminary ice crushing operation involving the use of suitable ice crushing means has to be carried out.

To speed up the procedure, a typical working method involves placing ice cubes in a blender with a revolving blade and then adding the previously-prepared coffee beverage. This method has certain practical drawbacks, however. For instance, "home-made" shaken coffee preparations are normally made in the kitchen. There is generally a limited number of electric power sockets over the kitchen worktop, which are usually already occupied by connections to "permanently-positioned" electrical domestic appliances, such as a microwave oven and a coffee-making machine, for instance. So it may be necessary to detach another domestic appliance from the mains power supply in order to connect a blender; for safety reasons, it is important to take such action with perfectly dry hands - and this is not always feasible when taking action quickly, handling ice and other liquids. Another solution would be to connect the blender to an available power point elsewhere in the kitchen, further away from the worktop: this complicates the procedure, however, as well as increasing the risk of making the kitchen dirty while moving around with containers full of liquids.

US 7231142 discloses a hot and cold beverage maker comprises an upper section with a brew basket and a water heater for preparing a hot beverage, and a lower section with a container for receiving the hot beverage. The container has a base with a rotary blade to blend ice and the beverage. US 3794952 discloses a device in which a number of independent electronical kitchen appliances are available. Another device capable of providing either hot or cold beverage is disclosed in US 5724883.

The object of the present invention is to provide a device that facilitates the procedure for the preparation of shaken beverages, such as shaken coffee in particular.

Another important object of the present invention is to provide a device that enables a reduction in the number of electrical domestic appliances needed to prepare a shaken coffee.

Another important object of the present invention is to provide a device that enables shaken beverages to be produced without dirtying the worktop where the beverage is prepared.

These objects are achieved with a device for preparing shaken beverages the mean features of which are set forth in the attached claim 1.

Further characteristics and advantages of the device according to the present invention will be apparent from the following description of some embodiments thereof, given as non-limiting examples with reference to the attached drawings, wherein:
- figure 1 shows a perspective view of a device according to the invention, with a section for preparing the coffee beverage of the type comprising a filter-holder with a handle;
- figure 2 shows a perspective view of the device of figure 1, separately showing certain components relating to the shaker section;
- figure 3 shows a perspective view of a variation of the device according to the invention;
- figure 4 shows a schematic, partially sectioned front view of a further variation of the device according to the invention.

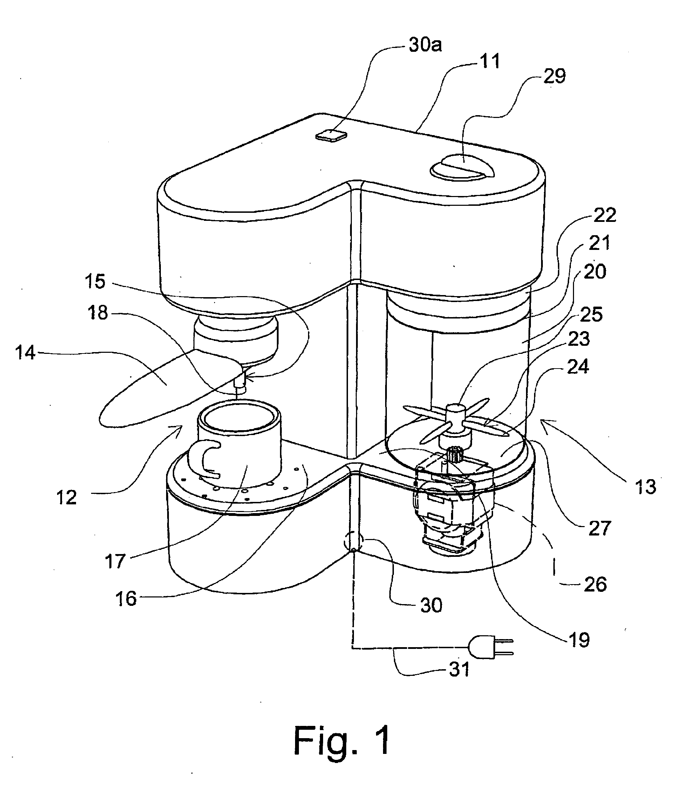

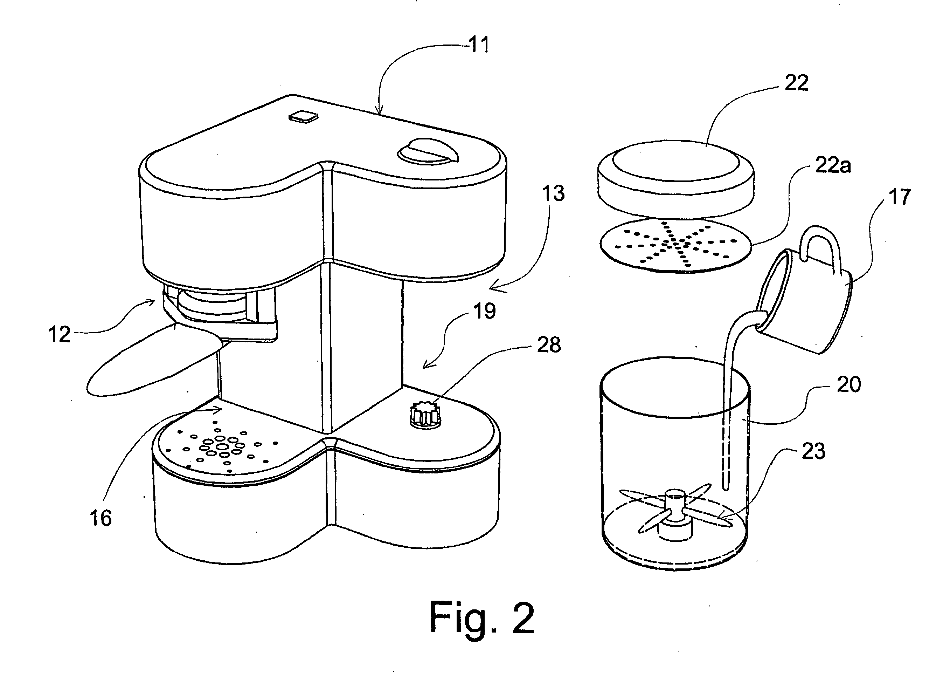

With reference to figures 1 and 2, the most straightforward configuration of the electric device according to the invention comprises, in the same box-shaped casing 11, a section for preparing the coffee beverage, generally indicated by the numeral 12, and one shaker section generally indicated by the numeral 13.

The section for preparing the beverage 12 comprises, in the embodiment of the invention shown in figures 1 and 2, the traditional components of an electric espresso coffee making machine of the type including a filter-holder with a filter-holder grip 14.

In this embodiment, the section for preparing the coffee beverage 12 includes means 15 for delivering the beverage to a single delivery point 16 for one cup 17, a discharge nozzle 18 being situated on the underside of the filter holder 14.

According to the invention, the shaking section 13 includes a space 19 for a removable container 20 with an upper opening 21 that can be closed with a corresponding lid 22, which is associated with a perforated cap 22a for pouring out the shaken coffee.

Inside the container 20 there are revolving blade means 23, comprising conventional blades 24 extending radially from a central hub 25. The hub 25 engages with a corresponding electric motor 26, schematically illustrated with a dotted line, located inside the box-shaped casing 11 underneath the blades 24. In other words, the hub 25 is obliged to rotate on the bottom 27 of the container 20. The container is formed with a through hole passing coaxially to the axis of rotation of the hub 25 to enable the passage of the power takeoff 28 from the motor 26 coupled to the correspondingly-shaped seat (not shown in the figures) at the base of the hub 25. Clearly, in line with the rotational coupling between the hub 25 and the bottom 27, there are suitable sealing means to prevent any leakage of liquids.

The motor 26 is associated with a speed control 29. The electric power supply to the device, shown schematically in figure 1 and indicated by the numeral 30, is the same for both sections 12 and 13, and provided by a single power cable 31 for connection to the domestic mains power supply; the common button for turning the power on/off is indicated by the numeral 30a.

The device is operated as follows. A cup of coffee is prepared and then transferred into the container, to which ice is also added. Then the container is covered with the lid and placed in the space in the shaker section. By means of the speed control 29, the blades in the blender are operated to crush the ice and mix it with the coffee, thus obtaining a shaken coffee with its characteristic foam. Then the container is removed from the machine and the shaken coffee is poured out in a cup or the like.

Having the sections for preparing the coffee and for shaking the coffee integrated in a single casing and with the same power supply enables a saving in the overall dimensions occupied on the kitchen worktop and avoids the need to find another available power point on the worktop, with advantages in terms of user safety and ergonomics, since the juxtaposition of the two sections enables a speedy and user-friendly operation without the risk of dirtying any adjacent areas. It goes without saying that the shaker section can also be used as a blender for other purposes.

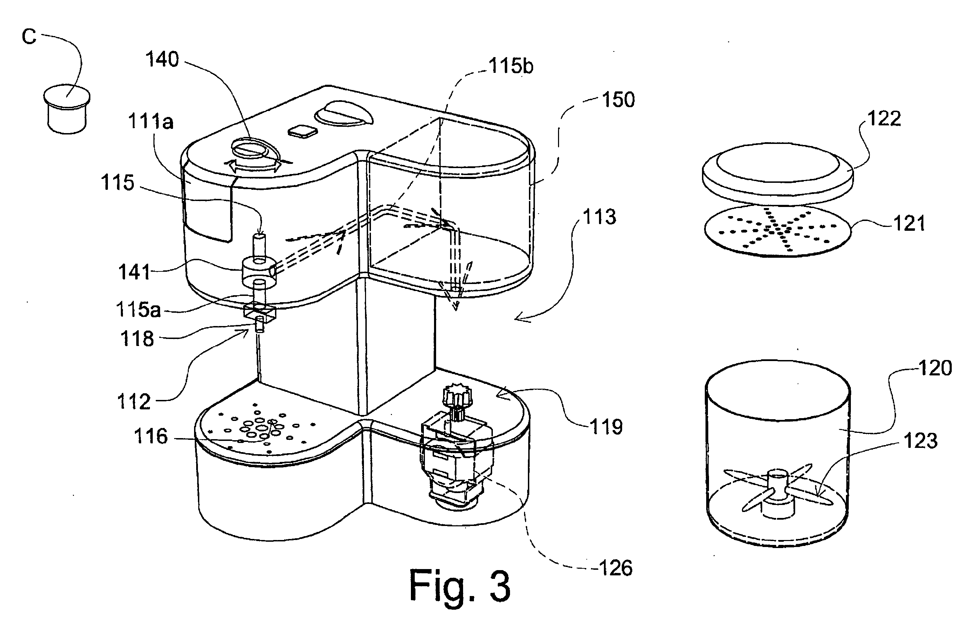

Figure 3 shows a first variation of the device according to the invention. In this case, the section for preparing the coffee is indicated as 112 and is of the type for the inserting a single-dose coffee pads (figure 3 shows a hatch 111 a providing access to the inside of the box-shaped casing, in the coffee-making section 112, for inserting a coffee pads C). In this case, the means 115 for delivering the coffee comprise a first channel 115a leading to a corresponding nozzle 118 that discharges into a first delivery point 116 for one cup, and a second channel 115b terminating above a second delivery point consisting of the space 119 for the container 120 in the shaker section 113. By means of a selector 140 acting on a corresponding solenoid valve 141, the user can choose whether to deliver the coffee through the first channel 115a or the second channel 115b. The user can thus decide whether to deliver the coffee into a cup or directly into the container 120(obviously without its cover). In the example described herein, the device also comprises an ice-making section 150 positioned above the space 119; said section 150 can synergically combine its thermodynamic ice-making cycle with the need to heat the boiler in the coffee-making section.

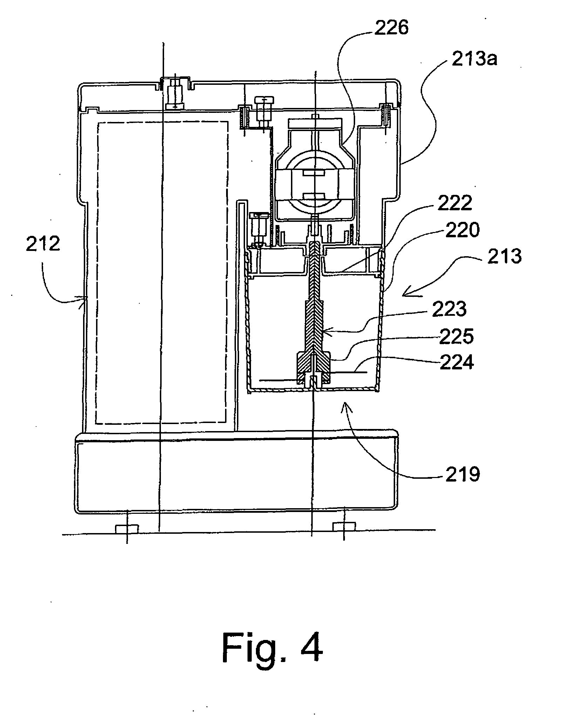

Figure 4 shows a further variation of the shaker section, now indicated as 213, in which a motor 226 is located on a portion 213a of the shaker section above the space 219 where the container 220 is positioned. In this case, the revolving blade means 223 are attached to said portion 213a and include a shaft 223a with one end coupled to the power takeoff 228 of the motor 226, while the other end forms the hub supporting the blades 225. In this example, the shaft 223a carrying the blades 224 is of the type associated with the cover 222 and can be uncoupled from the power takeoff 228 of the motor 226 when the container is removed from the casing 219. The container 220 is consequently an integral part of the shaker section, as in the previously-described examples. Taking for reference the arrangement of the shaft and blades of this last example, in other embodiments not described herein a protective blade-guard may also be provided. The provision of a blade guard results in that a dedicated container for the shaker section is unnecessary: any already available container of suitable shape and size may be used instead, because the guard protecting the blades avoid any risk of damage for the user and the bladed shaft can be left free in the shaker section when it is not in use.

Clearly, inasmuch as concerns the section for preparing the coffee beverage, the invention may comprise any known type of automatic or semiautomatic electrical machine, from the domestic type to the professional machine for bars or self-service distributors.

As for the shaker section, this can clearly be structured in a great variety of ways, with crushing blades integrated in the container or removable therefrom, or integrally attached to the motor. Moreover, if desired, this section can also be used as a normal blender.

The device according to the invention has been designed with the particular aim to produce shaken coffee, but it clear that, with suitable modifications in the section for preparing the beverage, it can be used to make other shaken beverages, such as chocolate, tea, barley coffee, and so on.

The device thus conceived may be susceptible to numerous modifications and variations, all coming within the scope of the invention such as defined by the claims, moreover, all the component may be substituted with other, technically equivalent ones without departing from the scope of the invention such as defined by the claims.

In practice, any materials may be used, providing they are compatible with their intended use, and the dimensions of the device may vary according to need and the state of the art.

## Claims

1. A device for preparing shaken beverages, comprising:
- a box-shaped casing (11),
- a section for preparing a beverage (12, 112, 212) with means (15, 115) for delivering the beverage to at least one delivery point (16, 116),
- a shaker section (13, 113, 213) comprising a space (19) for the insertion of a container (20) for holding ice and the beverage produced in said beverage-preparing section (13, 113, 213), and revolving blade means (23, 123, 223) connected to a motor (26, 126, 226) suitable for crushing the ice and mixing the beverage,
- said section for preparing a beverage (12, 112, 212) and said shaker section (13, 113, 213) with relevant motor (26, 126, 226) being all housed in said box-shaped casing (11) and being powered by a common electric power supply (30),
the device being **characterized in that** said means (115) for delivering the beverage include a first channel (115a) leading through a corresponding one or more discharge nozzle(s) (118) to a first delivery point (116) for a corresponding cup, and a second channel (115b) terminating above a second delivery point consisting of said space (119) for the container (120) in the shaker section (113).

2. A device according to claim 1, **characterised in that** it comprises a container (20, 120, 220) that is removable from said space (19, 119, 219), in which said revolving blade means (23, 123, 223) are integrated.

3. A device according to claim 1 or 2, **characterised in that** said revolving blade means (23, 123) are integrally attached to the bottom (26) of said container (20, 120) and include means of connection to the power takeoff on said motor (26, 126).

4. A device according to claims 1 or 2, **characterised in that** said revolving blade means (223) comprise a shaft (223a), cinematically connected to a motor (226) and extending downwards from a portion (213a) of said shaker section (213) over the space (219), said shaft (223a) ending with a hub (225) with at least one blade (225) extending therefrom.

5. A device according to any one of the previous claims, **characterised in that** said section for preparing a beverage (12, 112, 212) is of the type used to prepare coffee.

## Patentansprüche

1. Vorrichtung zur Vorbereitung von geschüttelten Getränken, enthaltend:
- ein kastenförmiges Gehäuse (11),
- eine Sektion zum Vorbereiten eines Getränks (12, 112, 212) mit Einrichtungen (15, 115) zum Zuführen des Getränks zu wenigstens einem Zuführpunkt (16, 116),
- eine Schüttelsektion (13, 113, 213), die einen Raum (19) für das Einsetzen eines Behälters (20) zum Aufnehmen von Eis und dem Getränk, das in der Getränkevorbereitungssektion (13, 113, 213) produziert wird, und sich drehende, mit einem Motor (26, 126, 226) verbundene Klingeneinrichtungen (23, 123, 223) enthält, die geeignet sind, um das Eis zu zerkleinern und das Getränk zu mischen,
- wobei die Sektion zum Vorbereiten eines Getränks (12, 112, 212) und die Schüttelsektion (13, 113, 213) mit einschlägigem Motor (26, 126, 226) alle in dem kastenförmigen Gehäuse (11) untergebracht sind und durch eine gemeinsame elektrische Leistungsversorgung (30) betrieben werden,
wobei die Vorrichtung **dadurch gekennzeichnet ist, dass** die Einrichtungen (115) zum Zuführen des Getränks einen ersten Kanal (115a), der durch eine oder mehrere entsprechende Ausgabedüse(n) (118) zu einem ersten Zuführpunkt (116) für eine entsprechende Tasse führt, und einen zweiten Kanal (115b) enthalten, der über einem zweiten Zuführpunkt endet, der aus dem Raum (119) für den Behälter (120) in der Schüttelsektion (113) besteht.

2. Vorrichtung nach Anspruch 1, **dadurch gekennzeichnet, dass** sie einen aus dem Raum (19, 119, 219) entfernbaren Behälter (20, 120, 220) enthält, in welchem die sich drehenden Klingeneinrichtungen (23, 123, 223) integriert sind.

3. Vorrichtung nach Anspruch 1 oder 2, **dadurch gekennzeichnet, dass** die sich drehenden Klingeneinrichtungen (23, 123) integral am Boden (27) des Behälters (20, 120) angebracht sind und Einrichtungen zur Verbindung mit der Leistungsabgabe des Motors (26, 126) enthalten.

4. Vorrichtung nach Anspruch 1 oder 2, **dadurch gekennzeichnet, dass** die sich drehenden Klingeneinrichtungen (223) eine Welle (223a) enthalten, die kinematisch mit einem Motor (226) verbunden sind und von einem Teil (213a) der Schüttelsektion (213) über den Raum (219) abwärts verläuft, wobei die Welle (223a) in einer Nabe (225) mit wenigstens einer Klinge (224) endet, die sich davon erstreckt.

5. Vorrichtung nach einem der vorhergehenden Ansprüche, **dadurch gekennzeichnet, dass** die Sektion zum Vorbereiten eines Getränks (12, 112, 212) von dem Typ ist, der zum Vorbereiten von Kaffee verwendet wird.

## Revendications

1. Un dispositif pour préparer des boissons secouées, comportant :
- une enveloppe en forme de boîte (11),
- une zone pour préparer une boisson (12, 112, 212) avec des moyens (15, 115) pour délivrer la boisson en au moins un point de débit (16, 116),
- une zone secoueur (13, 113, 213) comprenant un espace (19) pour y insérer un récipient (20) apte à contenir de la glace et la boisson produite dans ladite zone de préparation de la boisson (13, 113, 213), et des moyens de lame rotative (23, 123, 223) reliés à un moteur (26, 126, 226) aptes à piler la glace et à mélanger la boisson,
- ladite zone de préparation de la boisson (12, 112, 212) et ladite zone secoueur (13, 113, 213) avec le moteur approprié (26, 126, 226) étant tous logés dans ladite enveloppe en forme de boîte (11) et étant alimentés par une source d'énergie électrique commune (30),
le dispositif étant **caractérisé en ce que** lesdits moyens (115) pour délivrer la boisson comprennent un premier conduit (115a) conduisant à travers une ou plusieurs buses de débit correspondantes (118) à un premier point de débit (116) pour une tasse correspondante, et un second conduit (115b) se terminant au-dessus d'un second point de débit constitué par ledit espace (119) pour le récipient (120) dans la zone secoueur (113).

2. Un dispositif selon la revendication 1, **caractérisée en ce qu'**il comporte un récipient (20, 120, 220) qui peut être enlevé du dit espace (19, 119, 219), dans lequel sont intégrés lesdits moyens de lame rotative (23, 123, 223).

3. Un dispositif selon l'une des revendications 1 et 2, **caractérisé en ce que** lesdits moyens de lame rotative (23, 123) sont reliés en étant intégrés au fond (26) du dit récipient (20, 120) et comportent des moyens de connexion à une prise de force du dit moteur (26,126).

4. Un dispositif selon l'une des revendications 1 et 2, **caractérisé en ce que** lesdits moyens de lame rotative (223) comportent un arbre (223a), cinématiquement relié à un moteur (226) et s'étendant vers le bas à partir d'une partie (213a) de ladite zone secoueur (213) au-dessus de l'espace (219), ledit arbre (223a) se terminant par un moyeu (225) avec au moins une lame (225) s'étendant à partir de ce denier.

5. Un dispositif selon l'une quelconque des revendications précédentes, **caractérisé en ce que** ladite zone de préparation d'une boisson (12, 112, 212) est du type utilisé pour la préparation du café.
